# EUROPEAN PATENT APPLICATION

(11) **EP 4 844 341 A1**
(43) Date of publication of application: **25.11.2026**
(21) Application number: 25744476.0
(22) Date of filing: 14.01.2025
(51) Int. Cl.: G01C 21/32

(54) **METHOD AND APPARATUS FOR GENERATING MAP INFORMATION**

(30) Priority: 25.01.2024 CN 202410110313
(71) Applicant: Yinwang Intelligent Technologies Co., Ltd., Shenzhen, Guangdong 518110 (CN)
(72) Inventor: ZHANG, Yingjun, Shenzhen, Guangdong 518110 (CN); JIANG, Xiaoqi, Shenzhen, Guangdong 518110 (CN); LIU, Fei, Shenzhen, Guangdong 518110 (CN); LUO, Shaoshuai, Shenzhen, Guangdong 518110 (CN); FENG, Wenwei, Shenzhen, Guangdong 518110 (CN); KONG, Lulu, Shenzhen, Guangdong 518110 (CN)
(74) Representative: MERH-IP Matias Erny Reichl Hoffmann Patentanwälte PartG mbB
(86) International application number: PCT/CN2025/072198
(87) International publication number: WO 2025/157033

(57) **Abstract**

A method and an apparatus for generating map information are provided. The method includes: a vehicle flow data set includes data of a plurality of driving paths on target roads, and the target roads include at least a first road and a second road; and determining map information based on the vehicle flow data set, where the map information includes topology information of the target roads, and the topology information indicates a topological relationship between the first road and the second road. The method further includes: determining a boundary and a location of an intersection at a junction of the first road and the second road based on the topology information and the vehicle flow data set, and then determining a location of a lane center line of the first road and/or the second road based on the topology information, the vehicle flow data set, and the boundary and the location of the intersection. The method may be applied to the field of intelligent vehicles such as a new energy vehicle and an electric vehicle, and may be further applied to the field of map generation, to help reduce map information production costs and improve map information production efficiency.

## Description

This application claims priority to Chinese Patent Application No. 202410110313.6, filed with the China National Intellectual Property Administration on January 25, 2024 and entitled "METHOD AND APPARATUS FOR GENERATING MAP INFORMATION", which is incorporated herein by reference in its entirety.

### TECHNICAL FIELD

This application relates to the field of intelligent vehicles, and more specifically, to a method and an apparatus for generating map information.

### BACKGROUND

A map vector element represents static environment information, and includes a road (road) vector, a lane (lane) vector, an intersection (intersection) vector, and the like. The map vector element may provide prior information for navigation of an intelligent driving vehicle, and improve perception, positioning, prediction, and planning performance of the intelligent driving vehicle. Specifically, the map vector element may provide accurate road information to assist the intelligent driving vehicle in avoiding an obstacle; provide accurate road condition information to assist the intelligent driving vehicle in pre-determining and making a proper decision; or provide accurate route information to assist the intelligent driving vehicle in planning a global driving route in advance.

However, currently, the map vector element is generally extracted in a manual labeling or semi-manual labeling manner based on data (such as an image or a laser point cloud) obtained by a vehicle sensor. A processing procedure is relatively complex, and labor costs are relatively high, resulting in high costs and significant time consumption for map vector element extraction.

In view of this, this application provides a map information generation solution that can reduce production costs and improve production efficiency.

### SUMMARY

This application provides a method and an apparatus for generating map information, to help reduce map information production costs and improve production efficiency.

According to a first aspect, a method for generating map information is provided. The method may be performed by an intelligent driving device, for example, performed by a computing platform in the intelligent driving device, or performed by a chip or a processor in the intelligent driving device. The intelligent driving device may be a vehicle. Alternatively, the method may be performed by a cloud server or a component (such as a chip or a processor) of the cloud server.

The method includes: obtaining a vehicle flow data set, where the vehicle flow data set includes data of a plurality of driving paths on target roads, and the target roads include at least a first road and a second road; and determining map information based on the vehicle flow data set, where the map information includes topology information of the target roads, and the topology information indicates a topological relationship between the first road and the second road.

In the foregoing technical solution, road topology information is generated by using vehicle flow data, and a road vector does not need to be extracted in a manual labeling manner. This helps reduce map information production costs, and can improve map information production efficiency.

With reference to the first aspect, in some implementations of the first aspect, the target roads further include a third road, the first road, the second road, and the third road intersect at a first intersection, and the plurality of driving paths include a driving path from one of the first road, the second road, and the third road through the first intersection to any remaining one of the first road, the second road, and the third road; and the map information includes target intersection information, the target intersection information indicates a location and a boundary of the first intersection, and determining the map information based on the vehicle flow data set includes: determining at least one vector point of each of at least three roads based on the vehicle flow data set, where the at least one vector point indicates an area in which each road is connected to the first intersection; and determining the target intersection information based on the at least one vector point of each road.

In the foregoing technical solution, a location and a boundary of a road intersection may be determined based on information about a vehicle driving path. There is no marking such as a lane center line, a lane boundary line, or a lane separation line at a real intersection, and there is generally a stop line at the real intersection, and each stop line may constitute a boundary of the intersection. Therefore, determined intersection information that includes an intersection boundary helps improve consistency between generated map information and an actual road condition. In addition, the foregoing generation process does not require manual participation, which helps reduce map information production costs and improve map information production efficiency.

With reference to the first aspect, in some implementations of the first aspect, the map information includes lane information, the lane information indicates a location of a center line of each lane of the first sub-road, the first sub-road is a road that is in the first road and whose drivable direction is a first direction, and the vehicle flow data set includes a plurality of driving paths on the first sub-road; and determining the map information based on the vehicle flow data set includes: determining a width of the first sub-road based on the plurality of driving paths on the first sub-road; and determining the lane information based on the plurality of driving paths on the first sub-road and the width of the first sub-road.

In the foregoing technical solution, determining, based on a driving path, a location of a lane center line of each sub-road rather than a location of a lane boundary can reduce impact of inaccurate lane boundary information on accuracy of map information.

With reference to the first aspect, in some implementations of the first aspect, a first end of the first sub-road is connected to the first intersection, and the method further includes: determining first road information based on the vehicle flow data set, where the first road information indicates a location and a drivable direction of the first sub-road; and determining a location of the first end of the first sub-road based on the first road information and the target intersection information; and determining the lane information includes: determining the lane information based on the location of the first end of the first sub-road.

A road vector or a path vector indicated by road information may intrude into an intersection, resulting in intrusion of lane information determined based on the road information into the intersection. However, there is no marking such as a lane center line, a lane boundary line, or a lane separation line at a real intersection. Therefore, in the foregoing technical solution, an area in which a lane is connected to the intersection can be determined based on the intersection information, so that an end portion of the lane can be determined. This helps determine more accurate lane information.

With reference to the first aspect, in some implementations of the first aspect, determining the lane information includes: clustering intersection points between the plurality of driving paths on the first sub-road and a first perpendicular line, to determine a quantity of lanes on the first sub-road, where the first perpendicular line is a perpendicular line to the first sub-road; and determining the lane information based on the quantity of lanes and the width of the first sub-road.

In the foregoing technical solution, determining a location of a lane center line based on intersection points between driving paths and a perpendicular line to a road helps reduce impact of positioning accuracy and cross-lane vehicle flow on accuracy of a location of a lane center line.

With reference to the first aspect, in some implementations of the first aspect, the method further includes: the topology information includes second road information, the second road information indicates a topological relationship between a second sub-road and a third sub-road, and driving directions of the second sub-road and the third sub-road, the second road includes the second sub-road, and the first road includes the third sub-road; and determining the map information based on the vehicle flow data set includes: segmenting the plurality of driving paths based on a curvature change of each driving path in the plurality of driving paths; clustering the segmented driving paths based on locations of the segmented driving paths and the driving directions, to determine a first path vector and a second path vector, where the first path vector indicates a location and a drivable direction of the second sub-road, and the second path vector indicates a location and a drivable direction of the third sub-road; and determining the second road information based on the first path vector and the second path vector.

With reference to the first aspect, in some implementations of the first aspect, the vehicle flow data set includes a plurality of pieces of vehicle flow data, each of the plurality of pieces of vehicle flow data includes at least one piece of vehicle flow point information, each of the at least one piece of vehicle flow point information indicates one driving path, and each piece of vehicle flow point information includes location information of one vehicle flow point on the driving path.

In the foregoing technical solution, the vehicle flow data includes only vehicle flow point information indicating a driving path, which helps reduce communication overheads required for transmitting the vehicle flow data and memory overheads required for storing the vehicle flow data, and helps reduce calculation complexity of generating map information.

According to a second aspect, an apparatus for generating map information is provided. The apparatus includes: an obtaining unit, configured to obtain a vehicle flow data set, where the vehicle flow data set includes data of a plurality of driving paths on target roads, and the target roads include at least a first road and a second road; and a processing unit, configured to determine map information based on the vehicle flow data set, where the map information includes topology information of the target roads, and the topology information indicates a topological relationship between the first road and the second road.

With reference to the second aspect, in some implementations of the second aspect, the processing unit is further configured to: the target roads further include a third road, the first road, the second road, and the third road intersect at a first intersection, and the plurality of driving paths include a driving path from one of the first road, the second road, and the third road through the first intersection to any remaining one of the first road, the second road, and the third road; and the map information includes target intersection information, the target intersection information indicates a location and a boundary of the first intersection, and the processing unit is configured to: determine at least one vector point of each of the first road, the second road, and the third road based on the vehicle flow data set, where the at least one vector point indicates an area in which each road is connected to the first intersection; and determine the target intersection information based on the at least one vector point of each road, where the target intersection information indicates the location and the boundary of the first intersection.

With reference to the second aspect, in some implementations of the second aspect, the map information includes lane information, the lane information indicates a location of a center line of each lane of the first sub-road, and the first sub-road is a road that is in the first road and whose drivable direction is a first direction; and the vehicle flow data set includes a plurality of driving paths on the first sub-road, and the processing unit is configured to: determine a width of the first sub-road based on the plurality of driving paths on the first sub-road; and determine the lane information based on the plurality of driving paths on the first sub-road and the width of the first sub-road.

With reference to the second aspect, in some implementations of the second aspect, a first end of the first sub-road is connected to the first intersection, and the processing unit is further configured to: determine first road information based on the vehicle flow data set, where the first road information indicates a location and a drivable direction of the first sub-road; and determine a location of the first end of the first sub-road based on the first road information and the target intersection information; and determine the lane information based on the location of the first end of the first sub-road.

With reference to the second aspect, in some implementations of the second aspect, the processing unit is configured to: cluster intersection points between the plurality of driving paths on the first sub-road and a first perpendicular line, to determine a quantity of lanes on the first sub-road, where the first perpendicular line is a perpendicular line to the first sub-road; and determine the lane information based on the quantity of lanes and the width of the first sub-road.

With reference to the second aspect, in some implementations of the second aspect, a first end of the first sub-road is connected to the first intersection, and the processing unit is further configured to: determine first road information based on the vehicle flow data set, where the first road information indicates a location and a drivable direction of the first sub-road; and determine a location of the first end of the first sub-road based on the first road information and the target intersection information; and determine the lane information based on the location of the first end of the first sub-road.

With reference to the second aspect, in some implementations of the second aspect, the vehicle flow data set includes a plurality of pieces of vehicle flow data, each of the plurality of pieces of vehicle flow data includes at least one piece of vehicle flow point information, each of the at least one piece of vehicle flow point information indicates one driving path, and each piece of vehicle flow point information includes location information of one vehicle flow point on the driving path.

According to a third aspect, an apparatus for generating map information is provided. The apparatus includes: a memory, configured to store a computer program; and a processor, configured to execute the computer program stored in the memory, to enable the apparatus to perform the method according to any one of the possible implementations of the first aspect.

According to a fourth aspect, an intelligent driving device is provided. The intelligent driving device includes the apparatus according to any one of the possible implementations of the second aspect or the third aspect.

With reference to the fourth aspect, in some implementations of the fourth aspect, the intelligent driving device is a vehicle.

According to a fifth aspect, a computer program product is provided. The computer program product includes computer program code. When the computer program code is run on a computer, the computer is enabled to perform the method according to any one of the possible implementations of the first aspect.

It should be noted that the computer program code may be entirely or partially stored in a first storage medium, and the first storage medium may be encapsulated together with a processor, or may be encapsulated separately from the processor.

According to a sixth aspect, a computer-readable medium is provided. The computer-readable medium stores instructions. When the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

### BRIEF DESCRIPTION OF DRAWINGS

FIG. 1 is a diagram of a system for generating map information according to an embodiment of this application;
FIG. 2 is a block diagram of an apparatus for generating map information according to an embodiment of this application;
FIG. 3 is a schematic flowchart of a method for generating map information according to an embodiment of this application;
FIG. 4A and FIG. 4B are diagrams of vehicle flow data segmentation and clustering results according to an embodiment of this application;
FIG. 5A and FIG. 5B are diagrams of vehicle flow data merging and generated road vector results according to an embodiment of this application;
FIG. 6 is another schematic flowchart of a method for generating map information according to an embodiment of this application;
FIG. 7A, FIG. 7B, FIG. 7C, and FIG. 7D are diagrams of generated initial intersection information and target intersection information results according to an embodiment of this application;
FIG. 8 is still another schematic flowchart of a method for generating map information according to an embodiment of this application;
FIG. 9A and FIG. 9B are diagrams of results of determining intersection points between vehicle trajectories and a perpendicular line to a road according to an embodiment of this application;
FIG. 10 is a diagram of clustering results of intersection points between vehicle trajectories and a perpendicular line to a road according to an embodiment of this application;
FIG. 11 is a diagram of lane information according to an embodiment of this application;
FIG. 12A, FIG. 12B, and FIG. 12C are other diagrams of lane information according to an embodiment of this application;
FIG. 13 is another schematic flowchart of a method for generating map information according to an embodiment of this application;
FIG. 14 is a diagram of an apparatus for generating map information according to an embodiment of this application; and
FIG. 15 is another diagram of an apparatus for generating map information according to an embodiment of this application.

### DESCRIPTION OF EMBODIMENTS

To facilitate understanding of technical solutions of this application, the following describes technical terms used in this application.
1. Vector map: a map that uses vector data to represent a location and a shape of a geographic entity. The vector data may include at least one of a point, a line, and a plane.
2. Map vector element: a geographic entity location or shape identified by using vector data, including a road vector, a lane vector, and an intersection vector.
3. Vehicle flow data: data that is collected by a vehicle or a roadside device (roadside unit, RSU) and that includes a driving path of at least one vehicle. When the vehicle flow data is collected by a vehicle, the driving path of the at least one vehicle includes a driving path of at least one ego vehicle and/or a driving path of at least one another vehicle. The vehicle flow data includes a vehicle flow identifier (identifier, ID) and vehicle flow point information, where the vehicle flow ID may uniquely identify a group of vehicle flow data, the vehicle flow point information includes information about several vehicle flow points, and the information about each vehicle flow point indicates coordinates of a point on the driving path. In some implementations, the information about each vehicle flow point further indicates a timestamp of a point on the driving path, and the timestamp may indicate a moment at which the vehicle drives to the point.

In a current technical background, technologies used to extract a map vector element mainly include: manual labeling, remote sensing image extraction, and sensor data (for example, data output by a sensor such as an image or a laser point cloud) extraction. Manual labeling enables detailed drawing, depends on few resources, and can be independently performed. However, manual labeling has disadvantages of huge manpower input, a complex production process, and difficulty in ensuring accuracy of an extraction result. Remote sensing image extraction can cover a wide area, depend on few sources, and can extract a map vector element quickly only by relying on a remote sensing image. However, remote sensing image extraction has disadvantages of significant resource overheads for data source acquisition and data processing, and the presence of a blocked area. Sensor data extraction provides high data source accuracy and strong applicability, enabling this method to be suitable for different road environments. However, sensor data extraction has disadvantages of a long data acquisition period, a large data amount, high costs, high difficulty, and a complex data processing process. Currently, a commonly used method for map vector element extraction is performed in a manual/semi-manual labeling manner based on data obtained by a sensor. A processing procedure is relatively complex, and labor costs are relatively high, resulting in high costs and significant time consumption for map vector information extraction.

As lightweight vehicle-end data, vehicle flow data has many advantages, such as multiple sources, easy acquisition, and fast data processing efficiency, and has great data mining value. In view of this, embodiments of this application provide a method and an apparatus for generating map information, so that a road vector, an intersection vector, and a lane vector can be generated based on vehicle flow data, thereby helping improve extraction efficiency of map vector information and reduce extraction costs.

The following describes technical solutions of this application with reference to accompanying drawings.

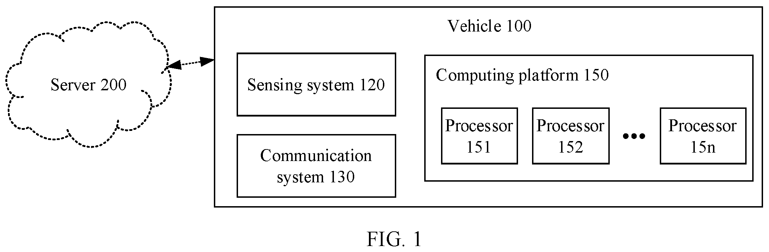

FIG. 1 is a diagram of an architecture of a system for generating map information according to an embodiment of this application. The system includes a vehicle 100, or may further include a server 200. As shown in FIG. 1, the vehicle 100 may include a sensing system 120, a communication system 130, and a computing platform 150. The sensing system 120 may include several sensors configured to sense information about an environment around the vehicle 100. For example, the sensing system 120 may include a positioning system. The positioning system may be a global positioning system (global positioning system, GPS), a BeiDou system, or another positioning system. For another example, the sensing system 120 may alternatively include one or more of an inertial measurement unit (inertial measurement unit, IMU), a LiDAR, a millimeter-wave radar, an ultrasonic radar, and a camera apparatus.

The communication system 130 is configured to exchange information between the vehicle 100 and the server 200, another vehicle, and a roadside device. For example, when driving on a current road, the vehicle 100 may receive, by using the communication system 130, at least one of the following: vehicle flow data that is of the current road and that is collected by the another vehicle, vehicle flow data collected by a roadside device of the current road, and historical vehicle flow data that is of the current road and that is stored in the server 200. Alternatively, the vehicle 100 may report vehicle flow data collected by the vehicle 100 to the server 200 by using the communication system, or send the vehicle flow data to the another vehicle or the roadside device. For example, the communication system 130 may communicate with the server 200, the another vehicle, the roadside device, and the like based on the Internet of Vehicles. The Internet of Vehicles includes but is not limited to a vehicle to vehicle (vehicle to vehicle, V2V) communication network, a vehicle to infrastructure (vehicle to infrastructure, V2I) communication network, and a vehicle to network (vehicle to network, V2N) communication network.

Some or all of functions of the vehicle 100 may be controlled by the computing platform 150. The computing platform 150 may include processors 151 to 15n. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

For example, the computing platform 150 may be one or more of a vehicle domain controller (vehicle domain controller, VDC), an autonomous driving domain controller (autonomous driving domain controller, ADC), or a cockpit domain controller (cockpit domain controller, CDC). For another example, the computing platform 150 may alternatively be one or more of an in-car application-server (in-car application-server, ICAS) controller, a body domain controller (body domain controller, BDC), a special equipment system (special equipment system, SES), a media graphics unit (media graphics unit, MGU), a body super core (body super core, BSC), or an advanced driving assistant system super core (advanced driving assistant system super core, ADAS super core). This is not limited in this application. The ICAS may include at least one of the following: a vehicle control server ICAS 1, an intelligent driving server ICAS 2, an intelligent cockpit server ICAS 3, and an information entertainment server ICAS 4.

The vehicle 100 may include an advanced driver assistance system (advanced driver assistance system, ADAS). The ADAS obtains information around the vehicle by using a plurality of sensors (including but not limited to a LiDAR, a millimeter-wave radar, a camera apparatus, an ultrasonic sensor, a global positioning system, and an inertial measurement unit) on the vehicle, and analyzes and processes the obtained information, to implement functions such as obstacle perception, target recognition, vehicle positioning, path planning, and driver monitoring/reminder. This improves driving safety, automation, and comfort of the vehicle.

In terms of logical functions, the ADAS system generally includes three main functional modules: a sensing module, a decision-making module, and an execution module. The sensing module senses an environment around a vehicle body through a sensor, and inputs corresponding real-time data to a processing center at a decision-making layer. The sensing module mainly includes a vehicle-mounted camera, an ultrasonic radar, a millimeter-wave radar, a LiDAR, or the like. The decision-making module uses a computing apparatus and an algorithm to make a corresponding decision based on information obtained by the sensing module. After receiving a decision signal from the decision-making module, the execution module takes a corresponding action, for example, driving, changing a lane, steering, braking, or warning.

At different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The level L0 indicates no automation, the level L1 indicates driving assistance, the level L2 indicates partial automation, the level L3 indicates conditional automation, the level L4 indicates high automation, and the level L5 indicates full automation. Tasks of monitoring and responding to road conditions at the L1 to L3 levels are jointly completed by a driver and a system, and the driver needs to take over a dynamic driving task. The L4 and L5 levels may enable the driver to be completely transformed into a passenger. Currently, functions that can be implemented by the ADAS mainly include but are not limited to: adaptive cruise, automatic emergency braking, automatic parking, blind spot monitoring, traffic warning/braking at a crossroad ahead, traffic warning/braking at a crossroad behind, preceding vehicle collision warning, lane deviation warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode.

In this embodiment of this application, the computing platform 150 may generate map information based on vehicle flow data that is of a road and that is obtained by the sensing system 120 and/or vehicle flow data that is of the road and that is obtained by using the communication system 130. The map information may include a road vector, an intersection vector, and a lane vector. Alternatively, the server 200 may generate the map information based on vehicle flow data that is of a road and that is reported by each vehicle or the roadside device.

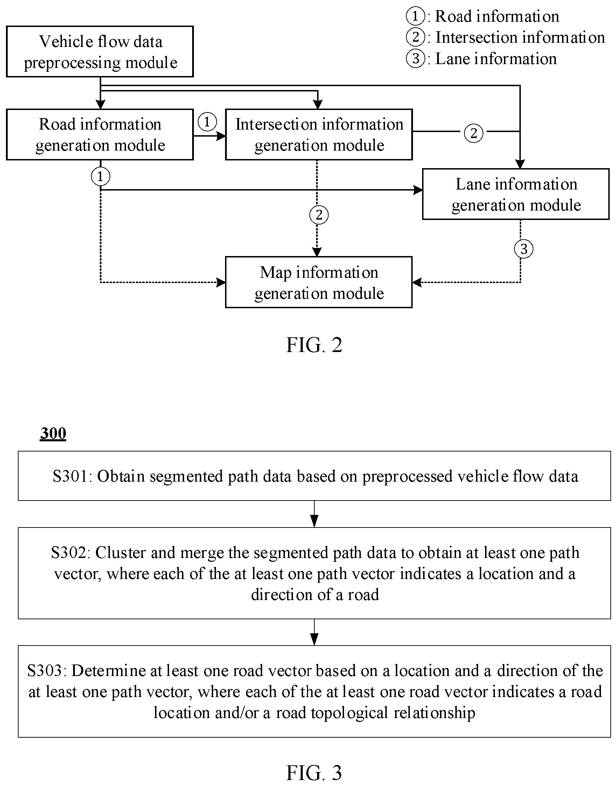

FIG. 2 is a block diagram of an apparatus for generating map information according to an embodiment of this application. The apparatus may be disposed in the vehicle 100 shown in FIG. 1, and more specifically, may be disposed in the computing platform 150, or may be disposed in the server 200 shown in FIG. 1. As shown in FIG. 2, the apparatus includes a vehicle flow data preprocessing module, a road information generation module, an intersection information generation module, a lane information generation module, and a map information generation module. The vehicle flow data preprocessing module is configured to perform processing such as cleaning and smoothing on the vehicle flow data, to remove missing, abnormal, repeated, and disordered vehicle flow data, to obtain preprocessed vehicle flow data. The road information generation module is configured to generate a road vector based on the preprocessed vehicle flow data. The road vector may indicate a location of a road, or may further indicate a topological relationship between roads, that is, a connection relationship between two or more roads, including information such as a road fork and a road intersection. The intersection information generation module is configured to generate an intersection vector based on the road vector and the preprocessed vehicle flow data. The intersection vector indicates a location and a boundary of an intersection. The lane information generation module is configured to generate a lane vector based on the road vector, the intersection vector, and the preprocessed vehicle flow data. The lane vector indicates a roadway (roadway) for various vehicles to drive together within a same road surface width, or the lane vector may further indicate a location of each lane of a road in the road. The map information generation module is configured to generate map information based on the road vector, the intersection vector, and the lane vector. The map information indicates a location of at least one road, a location and a boundary of an intersection associated with the at least one road, a quantity of lanes of each of the at least one road, and a location of each lane in the road.

It should be understood that the foregoing modules are merely examples. During actual application, the foregoing modules may be added or deleted based on an actual requirement. For example, in the apparatus shown in FIG. 2, the road information generation module and the intersection information generation module may be merged into one module.

The foregoing describes the apparatus and the system provided in this application. The following describes in detail a method provided in this application with reference to the accompanying drawings.

FIG. 3 is a schematic flowchart of a method for generating map information according to an embodiment of this application. A method 300 is a detailed description of a road vector generation method. The method 300 may be performed by the computing platform 150 or the server 200 in FIG. 1, or may be performed by the road information generation module in FIG. 2. The method 300 includes S301 to S304.

S301: Obtain segmented path data based on preprocessed vehicle flow data.

For example, the preprocessed vehicle flow data may be obtained by performing processing such as cleaning and smoothing on the vehicle flow data. When the method 300 is performed by a vehicle, a manner of obtaining the vehicle flow data may include at least one of the following: the vehicle collects the vehicle flow data, the vehicle obtains the vehicle flow data from another vehicle, the vehicle obtains the vehicle flow data from a server, and the vehicle obtains the vehicle flow data from a roadside device. When the method 300 is performed by a server, a manner of obtaining the vehicle flow data may include at least one of the following: the server obtains the vehicle flow data from the vehicle, and the server obtains the vehicle flow data from the roadside device.

For example, preprocessing the vehicle flow data includes sequentially cleaning missing vehicle flow data, abnormal vehicle flow data, repeated data, and disordered vehicle flow data. The missing vehicle flow data refers to vehicle flow data whose vehicle flow point information is partially or entirely missing and/or whose vehicle flow ID is missing. The abnormal vehicle flow data refers to vehicle flow data whose data collection time is abnormal, whose coordinates of a vehicle flow point jump, or which violates a vehicle kinematics constraint. The repeated data refers to vehicle flow data whose vehicle flow IDs are repeated and/or coordinates of a vehicle flow point are repeated. The disordered vehicle flow data refers to vehicle flow data with an excessively short path, an excessively small information amount, or an excessively large path offset.

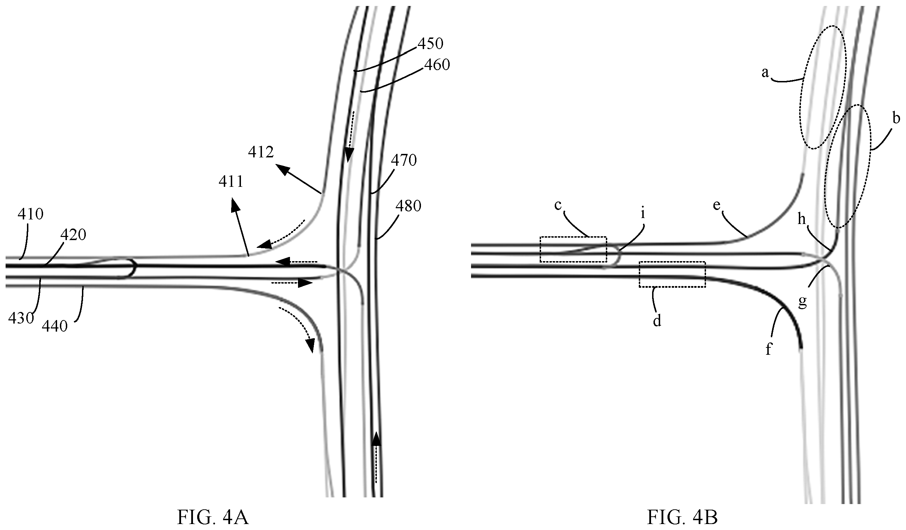

For example, obtaining the segmented path data based on the preprocessed vehicle flow data may include: dividing, based on a curvature change of each vehicle driving path (briefly referred to as a path below) indicated by the preprocessed vehicle flow data, the path into a plurality of segments, to obtain the segmented path data. An example in which the paths indicated by the preprocessed vehicle flow data include a path 410 to a path 480 shown in FIG. 4A is used. A curvature of the path 410 changes greatly at a point 411 and at a point 412. For example, the curvature changes before and after the point 411 and the point 412 each exceed a preset threshold. In this case, the path 410 may be divided into three segments by using the point 411 and the point 412 as boundary points, and so on. The path 420 to the path 480 may each be segmented. More specifically, the path 420, the path 430, and the path 440 may each be divided into three segments. Because curvatures of the path 450 to the path 480 do not change obviously, each of the path 450 to the path 480 may remain as one segment.

It may be understood that, because vehicle flow data includes coordinates and timestamp information, paths indicated by the vehicle flow data also have direction information. For example, a direction of a dashed line arrow in FIG. 4A indicates a direction of a path adjacent to the dashed line arrow, and the direction may indicate a drivable direction of a vehicle on a road. In other words, the segmented path data also carries direction information.

S302: Cluster and merge the segmented path data to obtain at least one path vector, where each of the at least one path vector indicates a location and a direction of a road.

For example, the segmented path data is clustered by using a clustering algorithm based on locations and directions of the paths, and paths with a same location and a same vehicle driving direction are clustered into one type. For example, by clustering the segmented path data shown in FIG. 4A, clustering results a to i shown in FIG. 4B, that is, a total of nine types of paths, can be obtained, where path segments with a same color are of one type. The clustering algorithm may be a k-means (k-means) clustering algorithm, or may be a Gaussian mixture model algorithm, or may be another clustering algorithm.

Further, paths of each type after clustering are merged. Based on path vectors of a same type, a representative path vector for the path vectors of the type is determined. The at least one path vector includes a representative path vector for paths of each type.

For example, an average direction vector of paths of a same type may be determined based on direction vectors of the paths of the same type, an intersection point between a perpendicular line to the average direction vector and each path in the paths of the same type is then determined, and a representative path vector is determined based on the intersection points. For example, the average direction vector of the paths of the same type is determined based on Formula (1), an intersection point between each of a plurality of perpendicular lines to the average direction vector and each path in the paths of the same type is then determined, and the intersection point between each perpendicular line and each path is processed based on Formula (2) to obtain coordinates of a representative path point. The plurality of perpendicular lines may be perpendicular lines drawn from a plurality of points selected from the average direction vector at a specific interval, that is, one perpendicular line in the plurality of perpendicular lines may be located in the middle of the paths of the same type, or may be located at one end of the paths of the same type, or may be located at another location of the paths of the same type. Further, a representative path vector is determined based on coordinates of representative path points corresponding to the plurality of perpendicular lines, where a direction of the vector is a direction of the paths of the same type. $\vec{V} = \frac{\vec{{v}_{1}} + \vec{{v}_{2}} + \vec{{v}_{3}} + ⋯ + \vec{{v}_{n}}}{\left|V\right|} ,$ (1) $x = {x}_{0} {P}_{0} + {x}_{1} {P}_{1} + ⋯ + {x}_{n} {P}_{n} , y = {y}_{0} {P}_{0} + {y}_{1} {P}_{1} + ⋯ + {y}_{n} {P}_{n} ,$ (2) *v̅ᵢ*(*i* = 1,2, ..., n) is a direction vector of each path in the paths of the same type, a direction vector of a path may be a vector from a start vector point of the path to an end vector point of the path, 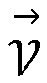 is an average direction vector, *x* and *y* are coordinates of a representative path point, *xᵢ* and *yᵢ* are coordinates of an intersection point between a perpendicular line to the average direction vector and each path in the paths of the same type, *Iᵢ* is a weight coefficient of each path in the paths of the same type, and *Pᵢ* is a normalized weight coefficient of each path in the paths of the same type, ${P}_{i} = \frac{{I}_{i}}{{I}_{1} + {I}_{2} + ⋯ + {I}_{n}}$, that is, *Σᵢ Pᵢ* = 1.

In some implementations, the paths of the same type may alternatively be merged by using another method. For example, an average scan line distance function is used as a consensus function, a similarity between representative paths is compared by using the consensus function, and then similar representative paths are merged. Alternatively, another artificial intelligence algorithm may be used to merge the paths of the same type.

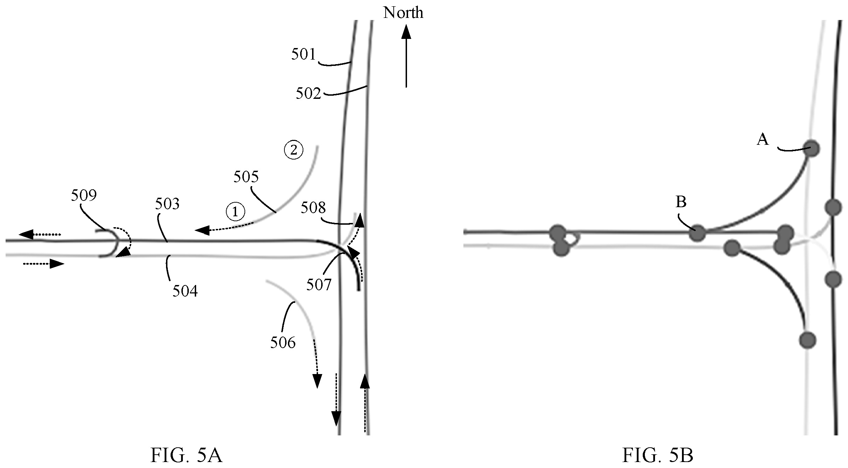

For example, after the clustering results a to i shown in FIG. 4B are merged, merging results shown in FIG. 5A may be obtained. The clustering results a to i sequentially correspond to the merging results, that is, path vectors 501 to 509. It should be understood that a direction of each path vector in the path vectors 501 to 509 is consistent with direction information of a path shown in FIG. 4A, that is, a direction of a dashed line arrow in FIG. 5A indicates a direction of a path adjacent to the dashed line arrow.

S303: Determine at least one road vector based on a location and a direction of the at least one path vector, where each of the at least one road vector indicates a road location and/or a road topological relationship.

For example, based on a location and a direction of each of the at least one path vector, paths whose directions match and whose distances are close are connected, to obtain a road vector. Direction matching may be understood as that a path has a same direction as another path adjacent to the path. For example, the path vector 505 is used as an example. The path vector 505 includes an end ① and an end ②, and path vectors adjacent to the end ① of the path vector 505 include a path vector 503 and a path vector 504, where a direction of the path vector 503 is the same as a direction of the end ① of the path vector 505. Therefore, a direction of the path vector 505 matches the direction of the path vector 503. Similarly, based on a direction of the end ② of the path vector 505, in the path vector 501 and the path vector 502, a direction of the path vector 501 matches the direction of the path vector 505.

Further, path vectors with matching directions and close locations may be connected to obtain a road vector. For example, as shown in FIG. 5B, a dot is a connection point, and a dot A and a dot B are a connection point between the path vector 505 and the path vector 501 and a connection point between the path vector 505 and the path vector 503, respectively.

More specifically, an example in which the path vector 505 is connected to the path vector 501 (and/or the path vector 509) is used. The path vector 501 may indicate that a direction of a road on which the path vector 501 is located is a north-south direction, and the drivable direction of the vehicle is from north to south. The end ① of the path vector 505 may indicate that a direction of a road on which the end ① is located is an east-west direction, and the drivable direction of the vehicle is from east to west. In this case, a road vector obtained by connecting the path vector 505 and the path vector 501 may indicate a topological relationship between the two roads and locations of the two roads.

It may be understood that when a road is a two-way road, a road vector indicates a topological relationship between a sub-road in one direction of the road and another road or a sub-road in one direction of another road. For example, the road in the north-south direction shown in FIG. 5A and FIG. 5B include a sub-road whose drivable direction is from south to north and a sub-road whose drivable direction is from north to south, and the road in the east-west direction shown in FIG. 5A and FIG. 5B includes a sub-road whose drivable direction is from east to west and a sub-road whose drivable direction is from west to east. In this case, the road vector obtained by connecting the path vector 505 and the path vector 501 indicates a topological relationship between the sub-road that is in the road in the north-south direction and whose drivable direction is from north to south and the sub-road that in the road in the east-west direction and whose drivable direction is from east to west.

According to the method for generating map information provided in this embodiment of this application, road information (that is, a road vector) indicating a drivable direction can be generated, so that the road information can be directly used for road navigation.

The foregoing describes the method for generating a path vector and a road vector. The following describes a method for generating intersection information and lane information based on the path vector and/or the road vector.

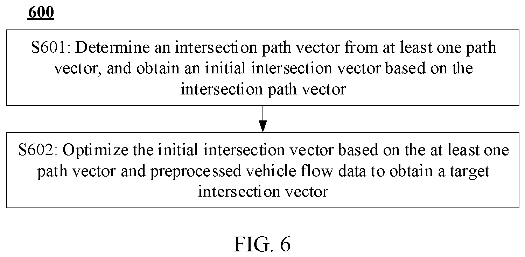

FIG. 6 is another schematic flowchart of a method for generating map information according to an embodiment of this application. A method 600 is a detailed description of an intersection vector generation method, and the method 600 may be performed after the method 300. The method 600 may be performed by the computing platform 150 or the server 200 in FIG. 1, or may be performed by the intersection information generation module in FIG. 2. The method 600 includes S601 and S602.

S601: Determine an intersection path vector from at least one path vector, and obtain an initial intersection vector based on the intersection path vector.

For example, an example in which an intersection is a junction of a road 711, a road 712, and a road 713 is used. The road 711 is a road in the east-west direction in FIG. 5A and FIG. 5B. That is, the road 711 includes a sub-road whose drivable direction is from east to west and a sub-road whose drivable direction is from west to east. The road 712 and the road 713 are the roads in the north-south direction in FIG. 5A and FIG. 5B, and each include a sub-road whose drivable direction is from south to north and a sub-road whose drivable direction is from north to south.

For example, for a specific implementation of determining the intersection path vector from the at least one path vector, refer to the description in S303. For example, the intersection path vector includes 505 to 508 shown in FIG. 5A.

In some implementations, the at least one path vector includes intersection path vectors corresponding to a plurality of intersections. Before the initial intersection vector is obtained based on the intersection path vector, all intersection path vectors may be clustered, to obtain an intersection path vector corresponding to each of the plurality of intersections.

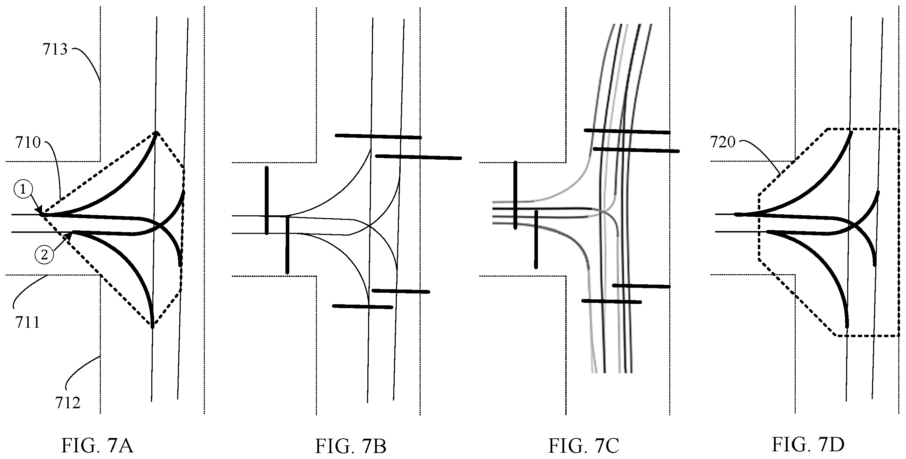

For example, the initial intersection vector may be represented by using a vector plane (referred to as an intersection plane below). In this case, obtaining the initial intersection vector based on the intersection path vector may include: processing, by using a convex hull algorithm, the intersection path vector corresponding to each intersection, to obtain an initial intersection plane. An intersection at which the path vectors 505 to 508 in FIG. 5A are located is used as an example. All intersection path vectors corresponding to the intersection are the path vectors 505 to 508. In this case, the path vectors 505 to 508 are processed by using the convex hull algorithm, that is, a minimum circumscribed convex polygon, that is, the initial intersection plane, for example, a convex polygon 710 shown in FIG. 7A, is generated based on endpoints of the path vectors 505 to 508.

S602: Optimize the initial intersection vector based on the at least one path vector and preprocessed vehicle flow data to obtain a target intersection vector.

For example, the preprocessed vehicle flow data may be the preprocessed vehicle flow data in S301.

For example, optimizing the initial intersection vector based on the at least one path vector and the preprocessed vehicle flow data may include the following three steps (a) to (c):
(a) Determine a non-intersection path vector based on the at least one path vector, and draw a perpendicular line on the non-intersection path vector based on vertices of the initial intersection plane. For example, perpendicular lines are sequentially drawn on the non-intersection path vector (for example, a straight-through path vector) based on vertices of the convex polygon 710, to obtain six perpendicular lines shown in FIG. 7B.
(b) Determine intersection points between the perpendicular lines and paths indicated by the preprocessed vehicle flow data. As shown in FIG. 7C, an example in which the paths indicated by the preprocessed vehicle flow data include the paths 410 to 480 is used, and intersection points between the six perpendicular lines and the paths 410 to 480 are sequentially determined.
(c) Optimize the initial intersection vector by using the convex hull algorithm based on the intersection points determined in step (b), to obtain the target intersection vector. For example, by optimizing the convex polygon 710 based on the intersection points between the six perpendicular lines and the paths 410 to 480, a convex polygon 720 shown in FIG. 7D can be obtained. It may be understood that the convex polygon 720 may indicate a location and a boundary of an intersection, and the boundary of the intersection indicates an area in which a road is connected to the intersection.

In some implementations, in S601, initial road surface information may alternatively be determined based on the road vector obtained in the method 300. Further, in S602, a non-intersection path is determined based on the road vector.

According to the method for generating map information provided in this embodiment of this application, intersection information that better matches an actual intersection boundary can be generated, and manual labeling does not need to be performed. This helps improve map information generation efficiency and reduce production costs.

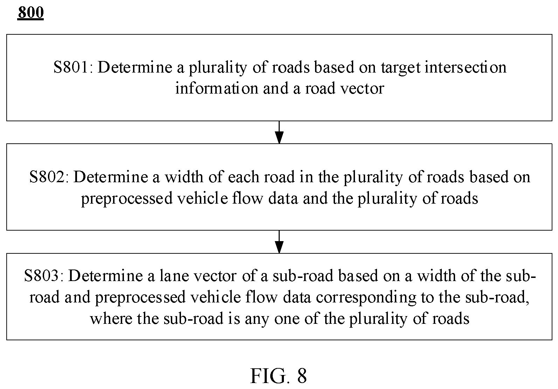

FIG. 8 is still another schematic flowchart of a method for generating map information according to an embodiment of this application. A method 800 is a detailed description of a lane vector generation method, and the method 800 may be performed after the method 600. The method 800 may be performed by the computing platform 150 or the server 200 in FIG. 1, or may be performed by the lane information generation module in FIG. 2. The method 800 includes S801 to S803.

S801: Determine a plurality of roads based on a target intersection vector and a road vector.

For example, the target intersection vector may include the target intersection vector obtained according to the method 600, and the road vector may include the road vector obtained according to the method 300. Specifically, an intersection area part in the road vector may be removed based on the target intersection vector, to obtain a plurality of roads.

It should be noted that the plurality of roads include a plurality of one-way roads with a same drivable direction or different drivable directions, and the one-way roads may be determined based on direction information of vehicle flow data. For example, the plurality of roads may include the sub-road that is in the road 711 in FIG. 7A to FIG. 7D and whose drivable direction is from east to west and the sub-road that is in the road 711 and whose drivable direction is from west to east.

S802: Determine a width of each road in the plurality of roads based on preprocessed vehicle flow data and the plurality of roads.

For example, the preprocessed vehicle flow data may be the preprocessed vehicle flow data in S301.

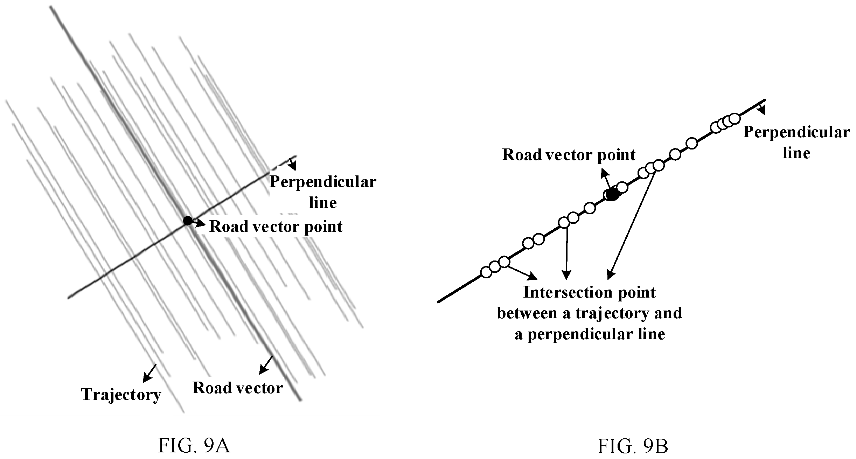

For example, determining a width of a road based on the preprocessed vehicle flow data and the road may include: drawing a perpendicular line on a road vector of the road by using a vector point of the road, to obtain intersection points between the perpendicular line and paths that are on the road and that are indicated by the preprocessed vehicle flow data, and then determining the width of the road based on the intersection points. For example, FIG. 9A shows a vector point of a road, a perpendicular line that is of a road vector of the road and that is generated based on the vector point, and paths on the road, and FIG. 9B shows intersection points between the paths corresponding to the road and the perpendicular line. Further, a width of the road may be determined based on two intersection points that are on the perpendicular line and that are farthest from each other. It may be understood that the road vector may include a plurality of vector points, and a vector point of the road may include an endpoint of the road vector, or may include one or more vector points in the middle of the road vector.

S803: Determine a lane vector of a sub-road based on a width of the sub-road and preprocessed vehicle flow data corresponding to the sub-road, where the sub-road is any one of the plurality of roads.

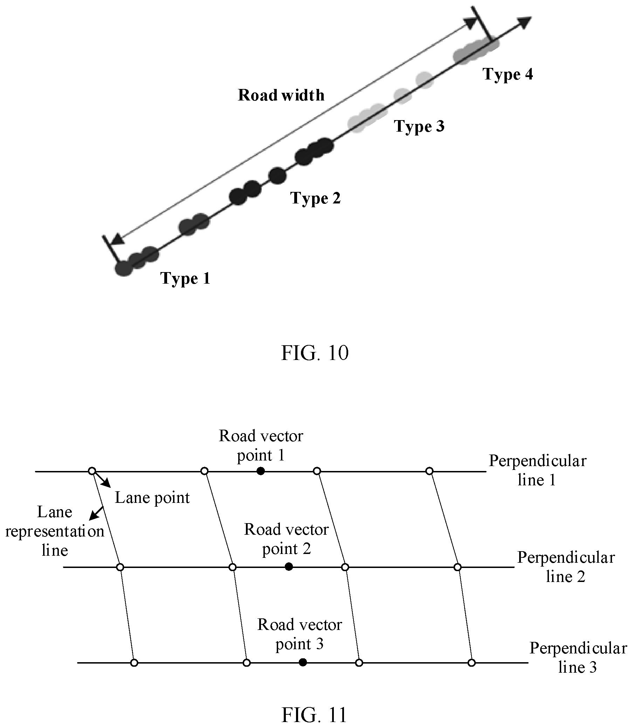

For example, intersection points between a perpendicular line to the sub-road and paths on the sub-road may be determined based on the preprocessed vehicle flow data corresponding to the sub-road, and clustering processing is performed on the intersection points to determine a quantity of lanes of the sub-road. For example, as shown in FIG. 10, four types of intersection points can be obtained by clustering the intersection points, and each type of intersection points corresponds to one lane. In this case, it can be determined that the road has four lanes. Then, a width of each lane can be preliminarily determined by dividing the width of the road determined in S802 by the quantity of lanes.

Further, a location of an intersection point (referred to as a lane point below) between a center line of each of the four lanes and a perpendicular line to a road vector may be determined based on the lane width and the road width. A lane representation line can be obtained by connecting corresponding lane points on two adjacent perpendicular lines, where the lane representation line indicates a location of a center line of a lane. For example, FIG. 11 shows a relationship between a lane point, a lane representation line, and a perpendicular line to a road vector.

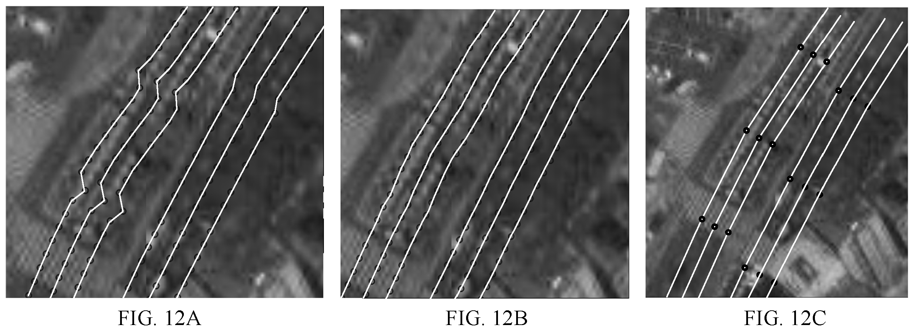

Further, processing such as smoothing and simplification is performed on a generated lane, and a final lane vector is output. For example, FIG. 12A shows location information of a lane representation line preliminarily obtained based on a width of a road and preprocessed vehicle flow data corresponding to the road, where a black circle indicates a lane point location, and a white short line indicates a location of a lane representation line. A result shown in FIG. 12B can be obtained through smoothing processing, and then simplification processing is performed on a smoothed result to obtain a result shown in FIG. 12C, to reduce a quantity of coordinates in the lane vector. For example, a seven-point linear smoothing method may be used for the smoothing processing, and a Douglas-Peucker (Douglas-Peucker, DP) algorithm is used for the simplification processing.

A path vector, for example, the path vector 503 in FIG. 5A and FIG. 5B, may intrude into an intersection, resulting in intrusion of lane information determined based on the path vector into the intersection. However, there is no lane at a real intersection. Therefore, in the method for generating map information provided in this embodiment of this application, a start location and/or an end location of a lane on a road may be determined based on intersection information, to avoid intrusion of a straight lane vector into the intersection, thereby helping generate more accurate lane information. In addition, in this application, a location of a lane center line is determined based on a clustering result of intersection points between vehicle driving paths and a perpendicular line to a road, so that a determining result of the location of the lane center line is not affected by positioning accuracy and a cross-lane vehicle flow.

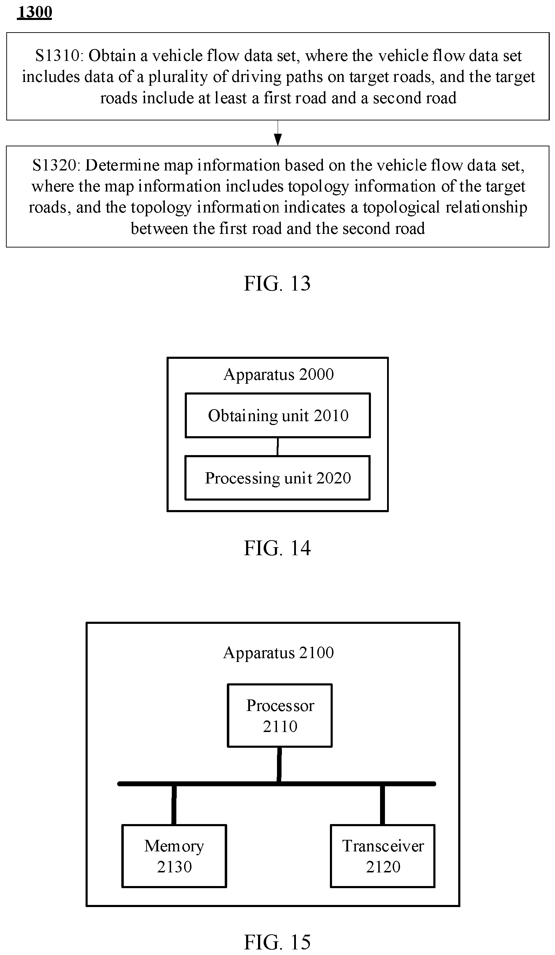

FIG. 13 is still another example flowchart of a method for generating map information according to an embodiment of this application. The method 1300 may be performed by the computing platform 150 or the server 200 in FIG. 1, or may be performed by a module in the apparatus shown in FIG. 2. The method 1300 includes S1310 and S1320.

S1310: Obtain a vehicle flow data set, where the vehicle flow data set includes data of a plurality of driving paths on target roads, and the target roads include at least a first road and a second road.

For example, the vehicle flow data set may include the preprocessed vehicle flow data in the foregoing embodiment. The first road and the second road may include any two of the road 711, the road 712, and the road 713 shown in FIG. 7A. The plurality of driving paths may include a plurality of driving paths that cross the first road and the second road. For example, an example in which the first road and the second road are respectively the road 712 and the road 713 is used. The plurality of driving paths may include the path 450, the path 460, the path 470, and the path 480 in FIG. 4A.

It should be noted that each road in the target roads may be a one-way road, or may be a two-way road.

S1320: Determine map information based on the vehicle flow data set, where the map information includes topology information of the target roads, and the topology information indicates a topological relationship between the first road and the second road.

For example, the topology information of the target roads may include the road vector in the foregoing embodiment. For a specific implementation of determining the topological relationship between the first road and the second road, refer to the description in the method 300.

In some implementations, the topology information includes second road information, the second road information indicates a topological relationship between a second sub-road and a third sub-road, and driving directions of the second sub-road and the third sub-road, the second road includes the second sub-road, and the first road includes the third sub-road; and determining the map information based on the vehicle flow data set includes: segmenting the plurality of driving paths based on a curvature change of each driving path in the plurality of driving paths; clustering the segmented driving paths based on locations of the segmented driving paths and the driving directions, to determine a first path vector and a second path vector, where the first path vector indicates a location and a drivable direction of the second sub-road, and the second path vector indicates a location and a drivable direction of the third sub-road; and determining the second road information based on the first path vector and the second path vector.

For example, the first path vector may be the path vector 503 shown in FIG. 5A and FIG. 5B, and the second path vector may be the path vector 501 shown in FIG. 5A and FIG. 5B. In this case, the second road information may be a vector obtained by connecting the path vector 501, the path vector 505, and the path vector 503.

In some implementations, the target roads further include a third road, the first road, the second road, and the third road intersect at a first intersection, and the plurality of driving paths include a driving path from one of the first road, the second road, and the third road through the first intersection to any remaining one of the first road, the second road, and the third road; and the map information includes target intersection information, the target intersection information indicates a location and a boundary of the first intersection, and determining the map information based on the vehicle flow data set includes: determining at least one vector point of each of at least three roads based on the vehicle flow data set, where the at least one vector point indicates an area in which each road is connected to the first intersection; and determining the target intersection information based on the at least one vector point of each road.

For example, the first intersection may be an n-way intersection, where n is an integer greater than or equal to 3. An example in which the first intersection is a three-way intersection is used. The first road, the second road, and the third road may be respectively the road 711, the road 712, and the road 713 shown in FIG. 7A. Further, the plurality of driving paths may include the path 410 for driving from the road 713 through the intersection to the road 711; or may include the path 440 for driving from the road 711 through the intersection to the road 712; or may include the path 430 for driving from the road 711 through the intersection to the road 713; or may include the path 470 and the path 480 for driving from the road 712 through the intersection to the road 713. That is, the plurality of driving paths may include one or more of the path 410 to the path 480 shown in FIG. 4A and FIG. 4B.

For example, the target intersection information may include the target intersection vector in the method 600. Each of the at least one vector point indicates an area in which a sub-road in the road is connected to the first intersection. For example, the road 711 is used as an example, the at least one vector point may include a vector point ① and a vector point ②. The vector point ① indicates an area in which a sub-road from east to west is connected to the intersection, and the vector point ② indicates an area in which a sub-road from west to east is connected to the intersection.

In some implementations, determining the at least one vector point of each of at least three roads based on the vehicle flow data set includes: determining a road vector or a path vector based on the vehicle flow data set, determining an intersection path vector based on the road vector or the path vector, and determining the at least one vector point based on the intersection path vector.

In some scenarios, a vector point may be an endpoint of a road vector. For a more specific method for determining a vector point, refer to the description in the method 600. Details are not described herein again.

For example, determining the target intersection information based on the at least one vector point of each road includes: determining initial intersection information based on the at least one vector point of each road, and optimizing the initial intersection information based on the vehicle flow data set, to obtain the target intersection information. The initial intersection information may be the initial intersection vector in the method 600. For a specific method for determining the initial intersection information based on the at least one vector point of each road and optimizing the initial intersection information to obtain the target intersection information, refer to the description in the method 600. Details are not described herein again.

In some implementations, the map information includes lane information, the lane information indicates a location of a center line of each lane of the first sub-road, the first sub-road is a road that is in the first road and whose drivable direction is a first direction, and the vehicle flow data set includes a plurality of driving paths on the first sub-road; and determining the map information based on the vehicle flow data set includes: determining a width of the first sub-road based on the plurality of driving paths on the first sub-road; and determining the lane information based on the plurality of driving paths on the first sub-road and the width of the first sub-road.

For example, the lane information may include the lane vector in the method 800. Determining the width of the first sub-road includes: determining the width of the first sub-road based on intersection points between a plurality of driving paths on the first sub-road and a perpendicular line to a road vector of the first sub-road. For a more specific implementation, refer to the description in S802. Details are not described herein again.

In some implementations, a first end of the first sub-road is connected to the first intersection, and the method further includes: determining first road information based on the vehicle flow data set, where the first road information indicates a location and a drivable direction of the first sub-road; and determining a location of the first end of the first sub-road based on the first road information and the target intersection information; and determining the lane information includes: determining the lane information based on the location of the first end of the first sub-road.

For example, the first road information may include the path vector in the foregoing embodiment.

In some implementations, the second road information may include the first road information.

For example, for a method for determining the location of the first end of the first sub-road, refer to the description in S801. Details are not described herein again.

In some implementations, determining the lane information includes: clustering intersection points between the plurality of driving paths on the first sub-road and a first perpendicular line, to determine a quantity of lanes on the first sub-road, where the first perpendicular line is a perpendicular line to the first sub-road; and determining the lane information based on the quantity of lanes and the width of the first sub-road.

For a more specific method for determining the lane information, refer to the description in the method 800. Details are not described herein again.

In some implementations, the vehicle flow data set includes a plurality of pieces of vehicle flow data, each of the plurality of pieces of vehicle flow data includes at least one piece of vehicle flow point information, each of the at least one piece of vehicle flow point information indicates one driving path, and each piece of vehicle flow point information includes location information of one vehicle flow point on the driving path.

In some implementations, each piece of vehicle flow point information further includes time information of a vehicle flow point on the driving path, and the time information indicates a relative time or an absolute time when the vehicle drives along the driving path to the vehicle flow point.

According to the method for generating map information provided in this embodiment of this application, road information and intersection information that indicates an intersection boundary may be generated by using vehicle flow data, and lane information may be generated based on the road information and the intersection information. In other words, map information including road information, intersection information, and lane information can be generated by using the vehicle flow data, which helps reduce production costs of a high definition map and improve generation efficiency.

In various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

The foregoing describes in detail the methods for generating map information provided in the embodiments of this application with reference to FIG. 1 to FIG. 13. The following describes in detail apparatuses provided in embodiments of this application with reference to FIG. 14 and FIG. 15. It should be understood that descriptions of the apparatus embodiments correspond to the descriptions of the method embodiments. Therefore, for content that is not described in detail, refer to the foregoing method embodiments. For brevity, details are not described herein again.

FIG. 14 is a block diagram of an apparatus 2000 for generating map information according to an embodiment of this application. The apparatus 2000 may include units configured to perform the methods in FIG. 3, FIG. 6, FIG. 8, and FIG. 11. In addition, the units in the apparatus 2000 are configured to implement corresponding procedures in the foregoing method embodiments. The apparatus 2000 includes an obtaining unit 2010. The obtaining unit 2010 may be configured to implement a corresponding data obtaining or receiving/sending function. The apparatus 2000 further includes a processing unit 2020. The processing unit 2020 may be configured to implement a corresponding processing function.

Optionally, the apparatus 2000 may further include a storage unit, the storage unit may be configured to store instructions and/or data, and the processing unit 2020 may read the instructions and/or the data in the storage unit, so that the apparatus implements related actions in the foregoing method embodiments.

It should be understood that a specific process in which the units perform the foregoing corresponding steps is described in detail in the foregoing method embodiments. For brevity, details are not described herein.

It should be further understood that the apparatus 2000 herein is embodied in a form of a functional unit. The term "module" or "unit" herein may be an application-specific ASIC, an electronic circuit, a processor (for example, a shared processor, a dedicated processor, or a group processor) configured to execute one or more software or firmware programs, a memory, a merged logic circuit, and/or another appropriate component that supports the described function.

The apparatus 2000 in the foregoing solutions has a function of implementing corresponding steps performed by the computing platform 150 or the server 200 in the foregoing methods. The function may be implemented by hardware, or may be implemented by hardware executing corresponding software. The hardware or software includes one or more modules corresponding to the foregoing function. For example, the obtaining unit may be replaced with a transceiver (for example, the obtaining unit may be replaced with a receiver), and another unit such as a processing unit may be replaced with a processor, to perform related processing operations in the method embodiments.

For example, the obtaining unit 2010 and the processing unit 2020 may be disposed in the system shown in FIG. 2. More specifically, the obtaining unit 2010 may include a vehicle flow data preprocessing module, and the processing unit 2020 may include a road information generation module, an intersection information generation module, and a lane information generation module, or the processing unit 2020 may further include a map information generation module. For example, operations performed by the obtaining unit 2010 and the processing unit 2020 may be performed by one processor, or may be performed by different processors. In a specific implementation process, the one or more processors may be processors disposed on the vehicle 100 shown in FIG. 1, or the apparatus 2000 may be a chip disposed in the vehicle 100.

In a specific implementation process, all or some of the units in the foregoing apparatus may be integrated together, or may be implemented independently. In an implementation, the units are integrated and implemented in a form of a system-on-a-chip (system-on-a-chip, SoC).

FIG. 15 is another block diagram of an apparatus for generating map information according to an embodiment of this application. An apparatus 2100 for generating map information shown in FIG. 15 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus such as an input/output interface (input/output interface), to implement communication between the apparatus 2100 and another device or a communication network.

The memory 2130 may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example rather than a limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The transceiver 2120 uses, for example, but is not limited to, a transceiver apparatus of a transceiver type, to implement communication between the apparatus 2100 and another device or a communication network, to receive/send data/information used to implement the methods in the foregoing embodiments.

An embodiment of this application further provides an intelligent driving device. The intelligent driving device includes the apparatus 2000 for generating map information or the apparatus 2100 for generating map information in the foregoing embodiments.

The intelligent driving device in embodiments of this application is a vehicle in a broad sense, and may be a transportation means (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip. The chip includes a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, unless otherwise specified, "/" means "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation.

In the several embodiments provided in this application, it should be understood that the disclosed system, apparatus, and method may be implemented in another manner. For example, the apparatus embodiments described above are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for generating map information, comprising:
obtaining a vehicle flow data set, wherein the vehicle flow data set comprises data of a plurality of driving paths on target roads, and the target roads comprise at least a first road and a second road; and
determining map information based on the vehicle flow data set, wherein the map information comprises topology information of the target roads, and the topology information indicates a topological relationship between the first road and the second road.

2. The method according to claim 1, wherein the target roads further comprise a third road, the first road, the second road, and the third road intersect at a first intersection, and the plurality of driving paths comprise a driving path from one of the first road, the second road, and the third road through the first intersection to any remaining one of the first road, the second road, and the third road; and
the map information comprises target intersection information, the target intersection information indicates a location and a boundary of the first intersection, and the determining the map information based on the vehicle flow data set comprises:
determining at least one vector point of each of the first road, the second road, and the third road based on the vehicle flow data set, wherein the at least one vector point indicates an area in which each road is connected to the first intersection; and
determining the target intersection information based on the at least one vector point of each road.

3. The method according to claim 1 or 2, wherein the map information comprises lane information, the lane information indicates a location of a center line of each lane of a first sub-road, and the first sub-road is a road that is in the first road and whose drivable direction is a first direction; and
the vehicle flow data set comprises a plurality of driving paths on the first sub-road, and the determining the map information based on the vehicle flow data set comprises:
determining a width of the first sub-road based on the plurality of driving paths on the first sub-road; and
determining the lane information based on the plurality of driving paths on the first sub-road and the width of the first sub-road.

4. The method according to claim 3, wherein a first end of the first sub-road is connected to the first intersection, and the method further comprises:
determining first road information based on the vehicle flow data set, wherein the first road information indicates a location and a drivable direction of the first sub-road; and
determining a location of the first end of the first sub-road based on the first road information and the target intersection information; and
the determining the lane information comprises:
determining the lane information based on the location of the first end of the first sub-road.

5. The method according to claim 3 or 4, wherein the determining the lane information comprises:
clustering intersection points between the plurality of driving paths on the first sub-road and a first perpendicular line, to determine a quantity of lanes on the first sub-road, wherein the first perpendicular line is a perpendicular line to the first sub-road; and
determining the lane information based on the quantity of lanes and the width of the first sub-road.

6. The method according to any one of claims 1 to 5, wherein the topology information comprises second road information, the second road information indicates a topological relationship between a second sub-road and a third sub-road, and driving directions of the second sub-road and the third sub-road, the second road comprises the second sub-road, and the first road comprises the third sub-road; and
the determining the map information based on the vehicle flow data set comprises:
segmenting the plurality of driving paths based on a curvature change of each driving path in the plurality of driving paths;
clustering segmented driving paths based on locations and driving directions of the segmented driving paths, to determine a first path vector and a second path vector, wherein
the first path vector indicates a location and a drivable direction of the second sub-road, and the second path vector indicates a location and a drivable direction of the third sub-road; and
determining the second road information based on the first path vector and the second path vector.

7. The method according to any one of claims 1 to 6, wherein the vehicle flow data set comprises a plurality of pieces of vehicle flow data, each of the plurality of pieces of vehicle flow data comprises at least one piece of vehicle flow point information, each of the at least one piece of vehicle flow point information indicates one driving path, and each piece of vehicle flow point information comprises location information of one vehicle flow point on the driving path.

8. An apparatus for generating map information, comprising:
an obtaining unit, configured to obtain a vehicle flow data set, wherein the vehicle flow data set comprises data of a plurality of driving paths on target roads, and the target roads comprise at least a first road and a second road; and
a processing unit, configured to determine map information based on the vehicle flow data set, wherein the map information comprises topology information of the target roads, and the topology information indicates a topological relationship between the first road and the second road.

9. The apparatus according to claim 8, wherein the target roads further comprise a third road, the first road, the second road, and the third road intersect at a first intersection, and the plurality of driving paths comprise a driving path from one of the first road, the second road, and the third road through the first intersection to any remaining one of the first road, the second road, and the third road; and
the map information comprises target intersection information, the target intersection information indicates a location and a boundary of the first intersection, and the processing unit is configured to:
determine at least one vector point of each of the first road, the second road, and the third road based on the vehicle flow data set, wherein the at least one vector point indicates an area in which each road is connected to the first intersection; and
determine the target intersection information based on the at least one vector point of each road, wherein the target intersection information indicates the location and the boundary of the first intersection.

10. The apparatus according to claim 8 or 9, wherein the map information comprises lane information, the lane information indicates a location of a center line of each lane of a first sub-road, and the first sub-road is a road that is in the first road and whose drivable direction is a first direction; and
the vehicle flow data set comprises a plurality of driving paths on the first sub-road, and the processing unit is configured to:
determine a width of the first sub-road based on the plurality of driving paths on the first sub-road; and
determine the lane information based on the plurality of driving paths on the first sub-road and the width of the first sub-road.

11. The apparatus according to claim 10, wherein a first end of the first sub-road is connected to the first intersection, and the processing unit is further configured to:
determine first road information based on the vehicle flow data set, wherein the first road information indicates a location and a drivable direction of the first sub-road;
determine a location of the first end of the first sub-road based on the first road information and the target intersection information; and
determine the lane information based on the location of the first end of the first sub-road.

12. The apparatus according to claim 10 or 11, wherein the processing unit is configured to:
cluster intersection points between the plurality of driving paths on the first sub-road and a first perpendicular line, to determine a quantity of lanes on the first sub-road, wherein the first perpendicular line is a perpendicular line to the first sub-road; and
determine the lane information based on the quantity of lanes and the width of the first sub-road.

13. The apparatus according to any one of claims 8 to 12, wherein the topology information comprises second road information, the second road information indicates a topological relationship between a second sub-road and a third sub-road, and driving directions of the second sub-road and the third sub-road, the second road comprises the second sub-road, and the first road comprises the third sub-road; and
the processing unit is configured to:
segment the plurality of driving paths based on a curvature change of each driving path in the plurality of driving paths;
cluster segmented driving paths based on locations and driving directions of the segmented driving paths, to determine a first path vector and a second path vector, wherein
the first path vector indicates a location and a drivable direction of the second sub-road, and the second path vector indicates a location and a drivable direction of the third sub-road; and
determine the second road information based on the first path vector and the second path vector.

14. The apparatus according to any one of claims 8 to 13, wherein the vehicle flow data set comprises a plurality of pieces of vehicle flow data, each of the plurality of pieces of vehicle flow data comprises at least one piece of vehicle flow point information, each of the at least one piece of vehicle flow point information indicates one driving path, and each piece of vehicle flow point information comprises location information of one vehicle flow point on the driving path.

15. An apparatus for generating map information, comprising:
a memory, configured to store a computer program; and
a processor, configured to execute the computer program stored in the memory, to enable the apparatus to perform the method according to any one of claims 1 to 7.

16. An intelligent driving device, comprising the apparatus according to any one of claims 8 to 15.

17. A computer-readable storage medium, wherein the computer-readable storage medium stores instructions, and when the instructions are executed by a processor, the method according to any one of claims 1 to 7 is implemented.

18. A computer program product, wherein the computer program product comprises computer program code, and when the computer program code is run, the method according to any one of claims 1 to 7 is implemented.

19. A chip, wherein the chip comprises a circuit, and the circuit is configured to perform the method according to any one of claims 1 to 7.
